# EUROPEAN PATENT APPLICATION

(11) **EP 2 876 825 A2**
(43) Date of publication of application: **27.05.2015**
(21) Application number: 14194742.4
(22) Date of filing: 25.11.2014
(51) Int. Cl.: H04H 20/10, H04H 60/37

(54) **Apparatus and method for producing media from which advertisement has been removed**

(30) Priority: 25.11.2013 KR 20130143872
(71) Applicant: Humax Co., Ltd., Yongin-si 449-934 (KR)
(72) Inventor: Kim, Kyung Koo, 463-922 Seongnam-si, Gyeonggi-do (KR)
(74) Representative: Stolmár & Partner Patentanwälte PartG mbB

(57) **Abstract**

Disclosed herein is a method of producing, by a media providing apparatus capable of editing recorded media content, media from which an advertisement has been removed, including the steps of searching the recorded media content for an advertisement part; deleting the retrieved advertisement part; generating an advertisement DB by separately storing the deleted advertisement part; determining whether or not a frame that belongs to the recorded media content and that is identical with one image frame of the advertisement DB is present; deleting an advertisement part from the recorded media content based on a black image at the front and rear of the same frame as the one image frame of the advertisement DB; and generating media content from which the advertisement part has been deleted based on the black image at the front and rear of the same frame as the one image frame of the advertisement DB.

## Description

### BACKGROUND OF THE INVENTION

### Field of the Invention

Exemplary embodiments of the present invention relate to an apparatus and method for producing media from which an advertisement has been removed, which are capable of removing an advertisement using an advertisement database (DB) with respect to content recorded by a media providing apparatus, such as a PVR or a Set-Top Box (STB), and more particularly, to an apparatus and method for producing media from which an advertisement has been removed, wherein an advertisement is searched for in media content recorded in background, the retrieved advertisement is cut from the recorded media content, an advertisement DB is configured using the cut advertisement, the front and rear of a retrieved frame are cut based on a frame including a black screen if the retrieved frame that belongs to the recorded media content and that is the same as a frame of a photograph of the advertisement DB is present, and media content from which the advertisement has been removed is automatically produced.

### Description of the Related Art

In general, a digital broadcasting receiver called an STB is an apparatus configured along with a TV receiver and configured to receive a variety of types of TV video data of multiple channels transmitted over a network or a satellite. The digital broadcasting receiver receives digital broadcasting data transmitted over a network or through a satellite and compressed using a Moving Picture Experts Group (MPEG)-2 method, extends compression data, decodes encoded data, converts the decoded data into a standard NTSC signal, and displays the NTSC signal on the TV receiver.

That is, the digital broadcasting receiver is configured to receive a digital broadcasting signal of a bit stream form, transmitted by a broadcasting station, for each packet, extract the broadcasting signal of a selected channel from the received digital broadcasting signal through transport de-multiplexing, decode the extracted broadcasting signal using the MPEG-2 method, and display the decoded signal.

The MPEG-2 method is an international standard for sending various types of videos and data for the next-generation television broadcasting and satellite broadcasting. MPEG-2 regulates that various signals of moving images, sound, and other pieces of supplementary service information shall be packetized into a bit stream, such as a Program Stream (PS) and a Transport Stream (TS). In multimedia communication using MPEG-2, the transmission side sends a TS on which a number of pieces of information are carried. The reception side extracts a number of the pieces of information from the TS through a syntax analysis, decodes the extracted information, and uses the decoded information.

The TS includes a broadcasting program for digital TV broadcasting and Electronic Program Guide (EPG) information that includes program guide information about the broadcasting program for each channel and for each time zone.

A user may select a broadcasting program based on EPG information and perform scheduled recording. As an HDD is recently mounted on the digital broadcasting receiver, broadcasting program data that is scheduled and recorded as described above is stored in a high-capacity HDD.

A conventional digital broadcasting receiver on which an HDD is mounted performs scheduled recording using an EPG. Such an EPG is frequently mismatched due to broadcasting company conditions or delay attributable to breaking news broadcasting or live broadcasting. Accordingly, in general, actually recorded programs include advertisement broadcasting or even an unnecessary program. As a result, a maximum of required programs may not be efficiently recorded on a limited HDD capacity, and existing recorded programs have to be deleted.

Furthermore, if an advertisement part appears while watching recorded media content through a conventional digital broadcasting receiver, a user has to perform a complicated operation for skipping the advertisement part using an FF function or a jump play function by manipulating a remote controller.

Furthermore, in order to remove an advertisement part from recorded media content, a user has to perform a complicated task for forming the recorded media content into a file and manually removing the advertisement part using a PC.

Accordingly, there is a need for a technology capable of automatically searching recorded media content for an advertisement part and playing back media content not having an advertisement part.

### [Prior Art Document]

### [Patent Document]

(Patent Document 0001) Korean Patent Application Publication No. 10-2007-0064803 (June 22, 2007)

### SUMMARY OF THE INVENTION

An object of the present invention is to provide an apparatus and method for producing media from which an advertisement has been removed, wherein an advertisement is searched for in media content recorded in background, the retrieved advertisement is cut from the recorded media content, an advertisement DB is configured using the cut advertisement, the front and rear of a retrieved frame are cut based on a frame including a black screen if the retrieved frame that belongs to the recorded media content and that is the same as a frame of a photograph of the advertisement DB is present, and media content from which the advertisement has been removed is automatically produced.

In accordance with an aspect of the present invention for achieving the object of the present invention, there is provided a STB (set top box) in communication with an advertisement DB for removing at least one advertisement from media content and producing media content from which advertisement has been removed, wherein the advertisement DB comprises a plurality of I frames (Intra coded frames) from frames of the advertisements, each advertisement being specified by black frames, the STB comprising: a communication unit for receiving media content comprising at least one advertisement; a storage unit for storing the received media content comprising at least one advertisement; a playback unit for playing back the stored media content comprising at least one advertisement; and a media production unit for producing media content from which at least one advertisement has been removed; wherein the media production unit is configured: to determine whether the media content comprising at least one advertisement comprises the same I frame as one of the plurality of I frames in the advertisement DB; to determine a group of the frames between a black frame prior to the same I frame and a black frame after the same I frame as an advertisement region; and to remove the advertisement region from the media content comprising at least one advertisement to produce media content from which at least one advertisement has been removed.

Furthermore, the media production unit is further configured: to determine whether the media content comprising at least one advertisement comprises the same I frames as the remaining I frames of the plurality of I frames in the advertisement DB; to confirm the determination of the advertisement region when it is determined that the media content comprising at least one advertisement comprises the same I frames as the remaining I frames of the plurality of I frames in the advertisement DB.

Furthermore, the advertisement DB further comprises a playback time of an advertisement, and the media production unit is further configured to confirm the determination of the advertisement region when the playback time of the advertisement region corresponds to the playback time of the advertisement in the advertisement DB.

Furthermore, the plurality of I frames in the advertisement DB are a predetermined number of I frames from a beginning frame of the advertisement and the predetermined number of I frames to an end of the advertisement, the predetermined number being selectable by a user.

Furthermore, the STB further comprises an advertisement DB generation unit for generating the advertisement DB and storing the advertisement DB in the storage unit, wherein the advertisement DB generation unit is configured: from a user watching the media content comprising at least one advertisement, to receive a signal indicative of a beginning of a series of advertisements and a signal indicative of an end of the series of advertisements via a remote controller reception unit ; to divide the series of advertisements into a plurality of advertisement regions based on black frames between the beginning and the end of the series of advertisements; and to store a plurality of I frames from frames of each of the plurality of advertisement regions in the advertisement DB.

Furthermore, the advertisement DB generation unit is configured to store the plurality of I frames from the frames of each of the plurality of advertisement regions in the advertisement DB when the playback time of the advertisement region is shorter than a predetermined playback time.

Furthermore, the STB further comprises an advertisement candidate DB generation unit for generating an advertisement candidate DB, the advertisement candidate DB being used by an external media management server for generating and storing the advertisement DB, wherein the advertisement candidate DB generation unit is configured: from a user watching the media content comprising at least one advertisement, to receive a signal indicative of a beginning of a series of advertisements and a signal indicative of an end of the series of advertisements via a remote controller reception unit; to divide the series of advertisements into a plurality of advertisement region candidates based on black frames between the beginning and the end of the series of advertisements; and to transmit the plurality of advertisement region candidates to the external media management server, wherein the external media management server generates the advertisement DB based on the plurality of advertisement region candidates received from a plurality of the users.

Furthermore, the STB further comprises a temporary advertisement DB generation unit for generating the advertisement DB without a user's operation, the temporary advertisement DB generation unit is configured: (a) to detect the determination of the advertisement region for a first media content; (b) in response to the detection of the determination of the advertisement region, to divide the first media content into a plurality of partitions based on black frames; and (c) to store the partitions having a playback time shorter than a predetermined playback time as temporary advertisement regions in a temporary advertisement DB.

Furthermore, the temporary advertisement DB generation unit is further configured: (d) to repeatedly perform (a) to (c) for media contents different from the first media content; (e) as a result of the repetition, to determine which of the temporary advertisement regions are stored in the temporary advertisement DB more than a predetermined number of times; and (f) to store a plurality of I frames from frames of the temporary advertisement regions which are stored in the temporary advertisement DB more than the predetermined number of times in the advertisement DB.

In accordance with another aspect of the present invention for achieving the object of the present invention, there is provided a computer readable medium for storing codes used in a STB (set top box) in communication with an advertisement DB for removing at least one advertisement from media content and producing media content from which advertisement has been removed, wherein the advertisement DB comprises a plurality of I frames (Intra coded frames) from frames of the advertisements, each advertisement being specified by black frames, the codes comprising: a code for receiving media content comprising at least one advertisement; a code for storing the received media content comprising at least one advertisement; a code for playing back the stored media content comprising at least one advertisement has been removed; and a code for producing media content from which at least one advertisement has been removed; wherein the code for producing media content from which at least one advertisement has been removed comprises: a code for determining whether the media content comprising at least one advertisement comprises the same I frame as one of the plurality of I frames in the advertisement DB; a code for determining a group of the frames between a black frame prior to the same I frame and a black frame after the same I frame as an advertisement region; and a code for removing the advertisement region from the media content comprising at least one advertisement to produce media content from which at least one advertisement has been removed.

Furthermore, the code for producing media content from which at least one advertisement has been removed further comprises: a code for determining whether the media content comprising at least one advertisement comprises the same I frames as the remaining I frames of the plurality of I frames in the advertisement DB; a code for confirming the determination of the advertisement region when it is determined that the media content comprising at least one advertisement comprises the same I frames as the remaining I frames of the plurality of I frames in the advertisement DB.

Furthermore, the advertisement DB further comprises a playback time of an advertisement, and the code for producing media content from which at least one advertisement has been removed further comprises a code for confirming the determination of the advertisement region when the playback time of the advertisement region corresponds to the playback time of the advertisement in the advertisement DB.

Furthermore, to generate the advertisement DB and to store the advertisement DB in the STB, the codes further comprises: from a user watching the media content comprising at least one advertisement, a code for receiving a signal indicative of a beginning of a series of advertisements and a signal indicative of an end of the series of advertisements via a remote controller reception unit; a code for dividing the series of advertisements into a plurality of advertisement regions based on black frames between the beginning and the end of the series of advertisements; and a code for storing a plurality of I frames from frames of each of the plurality of advertisement regions in the advertisement DB.

Furthermore, to generate an advertisement candidate DB which is used by an external media management server for generating and storing the advertisement DB, the codes further comprises: from a user watching the media content comprising at least one advertisement, a code for receiving a signal indicative of a beginning of a series of advertisements and a signal indicative of an end of the series of advertisements via a remote controller reception unit; a code for dividing the series of advertisements into a plurality of advertisement region candidates based on black frames between the beginning and the end of the series of advertisements; and a code for transmitting the plurality of advertisement region candidates to the external media management server, wherein the external media management server generates the advertisement DB based on the plurality of advertisement region candidates received from a plurality of the users

Furthermore, to generate the advertisement DB without a user's operation, the codes comprises: (a) a code for detecting the determination of the advertisement region for a first media content; (b) in response to the detection of the determination of the advertisement region, a code for dividing the first media content into a plurality of partitions based on black frames; and (c) a code for storing the partitions having a playback time shorter than a predetermined playback time as temporary advertisement regions in a temporary advertisement DB, (d) a code for repeatedly performing (a) to (c) for media contents different from the first media content; (e) as a result of the repetition, a code for determining which of the temporary advertisement regions are stored in the temporary advertisement DB more than a predetermined number of times; and (f) a code for storing a plurality of I frames from frames of the temporary advertisement regions which are stored in the temporary advertisement DB more than the predetermined number of times in the advertisement DB.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram illustrating the function blocks of an apparatus for producing media from which an advertisement has been removed in accordance with an embodiment of the present invention;
FIG. 2 is a diagram schematically illustrating an overall configuration of a system for producing media from which an advertisement has been removed in accordance with another embodiment of the present invention;
FIG. 3 is a flowchart illustrating a method of producing, by a media providing apparatus, media from which an advertisement has been removed in accordance with an embodiment of the present invention;
FIG. 4 is a flowchart illustrating a method for producing, by the system, media from which an advertisement has been removed in accordance with another embodiment of the present invention;
FIG. 5 is a diagram illustrating an example in which whether the same frame as an image frame of an advertisement DB is present in recorded media content is determined in accordance with an embodiment of the present invention; and
FIG. 6 is a diagram illustrating an example in which an advertisement part is deleted from recorded media content on a black image basis in accordance with an embodiment of the present invention.

### DESCRIPTION OF SPECIFIC EMBODIMENTS

The present invention may be modified in various ways and may have multiple embodiments, and thus specific embodiments will be illustrated in the drawings and described in detail. It is however to be understood that the specific embodiments are not intended to limit the present invention and the embodiments may include all changes, equivalents, and substitutions that are included in the spirit and technical scope of the present invention.

Hereinafter, an apparatus and method for producing media from which an advertisement has been removed in accordance with some exemplary embodiments of the present invention are described in detail with reference to the accompanying drawings. In describing the embodiments of the present invention with reference to the accompanying drawings, the same reference numbers will be used throughout the drawings to refer to the same or like parts, and redundant descriptions thereof are omitted.

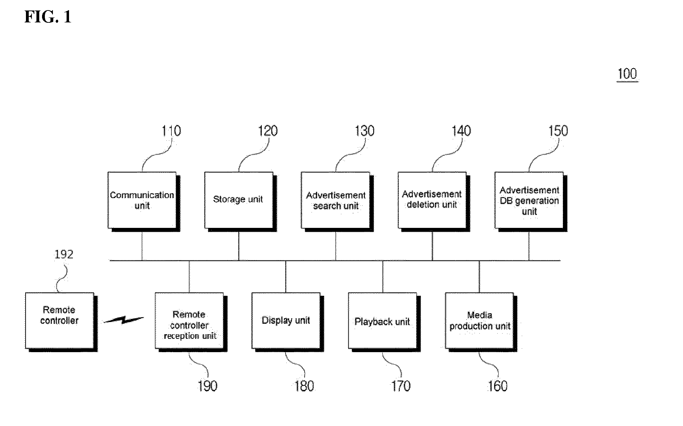

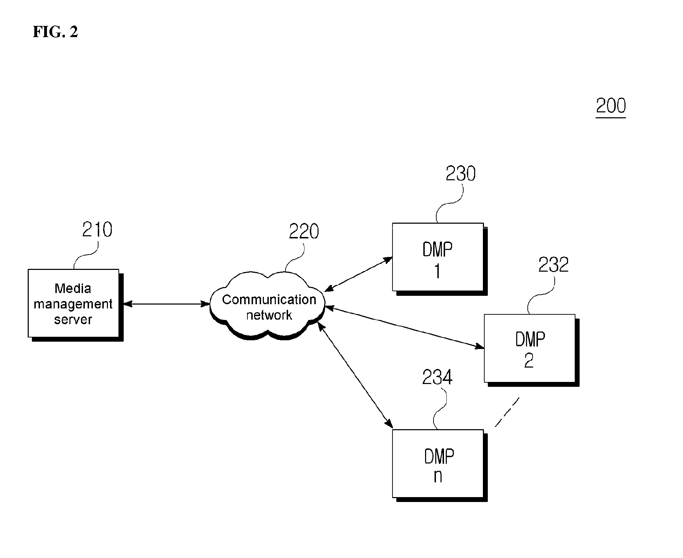

FIG. 1 is a diagram illustrating the function blocks of an apparatus 100 for producing media from which an advertisement has been removed in accordance with an embodiment of the present invention. The apparatus 100 of the present embodiment may be a STB (set top box) for removing at least one advertisement from media content and producing media content from which advertisement has been removed. The STB may be in communication with an advertisement DB which comprises a plurality of I frames (Intra coded frames) from the frames of an advertisement. Each advertisement can be specified by black frames. Usually, a black screen exists in the intermission from an advertisement to a next advertisement. The advertisement DB may be stored in the STB or in an external server (i.e. the media management server 210 in Fig. 2).

Referring to FIG. 1, an apparatus 100 for producing media from which an advertisement has been removed in accordance with an embodiment of the present invention may include a communication unit 110, a storage unit 120, an advertisement search unit 130, an advertisement deletion unit 140, an advertisement DB generation unit 150, a media production unit 160, a playback unit 170, a display unit 180, and a remote controller reception unit 190.

The communication unit 110 receives broadcasting data from a broadcasting apparatus. The communication unit 110 also receives media content comprising at least one advertisement.

The storage unit 120 stores media content on which the broadcasting data has been recorded. The storage unit 120 also stores the received media content comprising at least one advertisement.

The advertisement search unit 130 searches the recorded media content for an advertisement part.

The advertisement deletion unit 140 deletes the retrieved advertisement part from the recorded media content.

The media production unit 160 determines whether or not the same frame as one image frame of the advertisement DB is present in the recorded media content. If, as a result of the determination, the same frame is found to be present, the media production unit 160 deletes a retrieved advertisement part from the recorded media content based on a black image at the front and rear of the same frame as the one image frame of the advertisement DB through the advertisement deletion unit 140, and generates media content from which the retrieved advertisement part has been from based on the black image at the front and rear of the same frame as the one image frame of the advertisement DB.

More particularly, the media production unit 160 produces media content from which at least one advertisement has been removed. The media production unit 160 determines whether the media content comprising at least one advertisement comprises the same I frame as one of the plurality of I frames in the advertisement DB. The media production unit 160 determines a group of the frames between a black frame prior to the same I frame and a black frame after the same I frame as an advertisement region. In order to produce media content from which at least one advertisement has been removed, the media production unit 160 removes the advertisement region from the media content comprising at least one advertisement.
The media production unit 160 determines whether the media content comprising at least one advertisement comprises the same I frames as the remaining I frames of the plurality of I frames in the advertisement DB. Only when it is determined that the media content comprising at least one advertisement comprises the same I frames as the remaining I frames of the plurality of I frames in the advertisement DB, the media production unit 160 confirms the determination of the advertisement region. By this additional process, the advertisement region can be exactly determined.
Meanwhile, the advertisement DB may further comprise a playback time of an advertisement. Conventionally, the playback time of an advertisement is 30 seconds to 1 minute. In this case, the media production unit 160 confirms the determination of the advertisement region only when the playback time of the advertisement region corresponds to the playback time of the advertisement in the advertisement DB.
The number of I frames stored in the advertisement DB may be a predetermined number. For example, a predetermined number of I frames from a beginning frame of the advertisement and a predetermined number of I frames to an end of the advertisement may be stored in the advertisement DB. The predetermined number is selectable by a user.
The advertisement DB generation unit 150 generates the advertisement DB and stores the advertisement DB in the storage unit 120. In order to generate the advertisement DB, the advertisement DB generation unit 150 receives, from a user watching the media content comprising at least one advertisement and via a remote controller reception unit 190, a signal indicative of a beginning of a series of advertisements and a signal indicative of an end of the series of advertisements. It is usual that successive advertisements (for example, 10 advertisements) are broadcast before the main program. The advertisement DB generation unit 150 divides the series of advertisements into a plurality of advertisement regions based on black frames between the begging and the end of the series of advertisements. For example, the group of frames between two black frames is an advertisement region. The advertisement DB generation unit 150 stores a plurality of I frames from the frames of each of the plurality of advertisement regions in the advertisement DB.
In addition, only when the playback time of the advertisement region is shorter than a predetermined playback time, the advertisement DB generation unit 150 stores the plurality of I frames from the frames of each of the plurality of advertisement regions in the advertisement DB. It is usual that the playback time of an advertisement is 30 seconds. Thus, if the playback time of an advertisement region exceeds the predetermined playback time, the advertisement region is possibly not an advertisement. The advertisement DB may be generated without the user's operation. For this, the apparatus 100 of the present embodiment may comprise a temporary advertisement DB generation unit (not shown) which is configured: (a) to detect the determination of the advertisement region for a first media content, (b) in response to the detection of the determination of the advertisement region, to divide the first media content into a plurality of partitions based on black frames (i.e. a group of frames between two black frames is a partition), and (c) to store the partitions having a playback time shorter than a predetermined playback time (for example, 30 seconds) as temporary advertisement regions in a temporary advertisement DB. In order to determine which of the advertisement regions in the temporary advertisement DB correspond to advertisements, the temporary advertisement DB generation unit (not shown) is configured: (d) to repeatedly perform (a) to (c) for media content different from the first media content, (e) as a result of repetition, to determine which of the temporary advertisement regions are stored in the temporary advertisement DB more than a predetermined number of times, and (f) to store a plurality of I frames from frames of the temporary advertisement regions which are stored in the temporary advertisement DB more than the predetermined number of times, in the advertisement DB.
Meanwhile, the generation of the advertisement DB may be performed by the external media management server (210 in Fig. 2). For this, the apparatus 100 of the present embodiment (i.e. the STB) may comprise an advertisement candidate DB generation unit (not shown) which generates an advertisement candidate DB. The advertisement candidate DB is used by the external media management server (210 in Fig. 2) to generate and store the advertisement DB. More particularly, the advertisement candidate DB generation unit (not shown) receives, from a user watching the media content comprising at least one advertisement and via the reote controller reception unit (190), a signal indicative of a beginning of a series of advertisement and a signal indicative of an end of the series of advertisement. It is usual that successive advertisements (for example, 10 advertisements) are broadcast before the main program. The advertisement candidate DB generation unit (no shown) divides the series of advertisements into a plurality of advertisement region candidates based on black frames between the beginning and the end of the series of advertisements. For example, the group of frames between two black frames is an advertisement region. The advertisement candidate DB generation unit (not shown) transmits the plurality of advertisement region candidates to the external media management server (210 in Fig. 2). The external media management server (210 in Fig. 2) generates the advertisement DB based on the plurality of advertisement region candidates received from a plurality of users. The playback unit 170 plays back the generated media content.

The display unit 180 displays the played media content on a screen.

When an advertisement part appears while recorded media content is played back, the remote controller reception unit 190 receives the start point and end point of an advertisement or receives the time of the advertisement part in response to a user's input manipulation.

Furthermore, the media production unit 160 receives the start point and end point of an advertisement part from the remote controller 190 while recorded media content is played back and stores the start point and end point of the advertisement part in the storage unit 120. The advertisement search unit 130 checks the start point and end point of the advertisement part in the recorded media content.

Furthermore, the media production unit 160 stores a specific number of I frames from the start point of an advertisement part in the advertisement DB and stores a specific number of I frames from the end point of the advertisement part, together with information about the time from the start point of the advertisement part to the end point of the advertisement part, in the advertisement DB.

Furthermore, the media production unit 160 determines a retrieved advertisement part to be an advertisement part if the playback time of the retrieved advertisement part is equal to or smaller than the time set by the remote controller 190 in response to a user's manipulation.

Furthermore, the media production unit 160 compares the time of an advertisement part, including the same frame as one image frame of the advertisement DB, with the time of an advertisement part including the one image frame of the advertisement DB, and determines whether or not the advertisement part including the same frame as the one image frame of the advertisement DB is identical with the advertisement part including the one image frame of the advertisement DB based on a result of the comparison.

Furthermore, if the time of an advertisement part deleted from recorded media content based on a black image at the front and rear of the same frame as one image frame of the advertisement DB is equal to or smaller than an advertisement time set by the remote controller 190, the media production unit 160 stores the deleted advertisement part in the temporary advertisement DB.

After repeating the operation of comparing the time of the advertisement part, including the same frame as the one image frame of the advertisement DB, with the time of the advertisement part including the one image frame of the advertisement DB and of deleting the advertisement part based on the black image at the front and rear of the same frame as the one image frame of the advertisement DB, the media production unit 160 detects a frame that belongs to another piece of media content of the recorded media content and that is the same as an image frame of a temporary advertisement DB, stores one or more advertisement parts deleted based on a black image at the front and rear of the detected frame in the temporary advertisement DB, and updates the temporary advertisement DB by applying the temporary advertisement DB to the advertisement DB.

FIG. 2 is a diagram schematically illustrating an overall configuration of a system for producing media from which an advertisement has been removed in accordance with another embodiment of the present invention.

Referring to FIG. 2, the system 200 for producing media from which an advertisement has been removed in accordance with another embodiment of the present invention includes a media management server 210, a communication network 220, and a plurality of Digital Multimedia Players (DMPs) 230 to 234.

The media management server 210 provides an advertisement DB to the plurality of DMPs 230 to 234.

Furthermore, the media management server 210 collects advertisement candidate DBs received from the plurality of DMPs, updates the advertisement DB using the collected advertisement candidate DBs, and provides the updated advertisement DB to a DMP connected thereto.

The communication network 220 provides a communication path between the DMP 230 to 234 and the media management server 210.

Each of the plurality of DMPs 230 to 234 accesses the media management server 210, receives an advertisement DB, searches recorded media content for an advertisement part using the received advertisement DB, generates media content from which the advertisement part has been removed by deleting the retrieved advertisement part, generates an advertisement candidate DB using the deleted advertisement part, and sends the generated advertisement candidate DB to the media management server 210.

In this case, the DMP deletes the retrieved advertisement part from the recorded media content based on a black image at the front and rear of the same frame as one image frame of the advertisement DB.

Furthermore, if the time of the advertisement part deleted based on the black image at the front and rear of the same frame as one image frame of the advertisement DB is equal to or smaller than the time of an advertisement time set by the remote controller 190, the DMP generates the advertisement candidate DB using the deleted advertisement part and sends the generated advertisement candidate DB to the media management server 210.

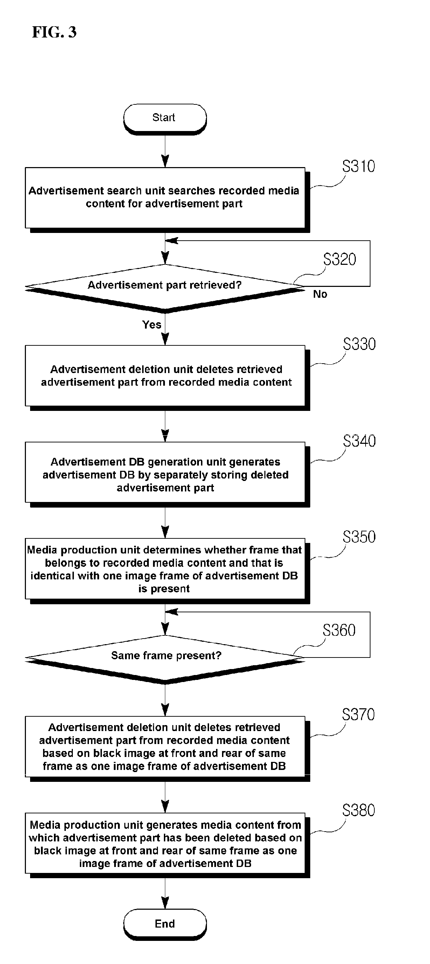

FIG. 3 is a flowchart illustrating a method of producing, by a media providing apparatus, media from which an advertisement has been removed in accordance with an embodiment of the present invention.

In an embodiment of the present invention, a DMP, such as an STB configured to receive broadcasting data from a broadcasting apparatus and to record the received broadcasting data in the form of media content or provide the received broadcasting data to TV is hereinafter called a "media providing apparatus" as a higher concept.

Referring to FIG. 3, the advertisement search unit 130 of the media providing apparatus 100 in accordance with an embodiment of the present invention searches recorded media content for an advertisement part at step S310.

In this case, in the state in which the start point and end point of an advertisement part have been received from the remote controller 190 and stored while the playback unit 170 plays back the recorded media content stored in the storage unit 120, the advertisement search unit 130 checks the start point and end point of the advertisement part in the recorded media content. That is, a user may input the start point of an advertisement using the remote controller 190 when an advertisement part is started while playing back and watching recorded media content, may set the end point of the advertisement when the advertisement reaches the end point, and may input the set end point of the advertisement.

Accordingly, if the playback time of a retrieved advertisement part is equal to or smaller than the time set by the remote controller in response to a user's manipulation, the advertisement search unit 130 determines the retrieved advertisement part to be an advertisement part.

Furthermore, a user may set a total time of an advertisement part to, for example, 1 minute or 2 minutes when inputting the start point and end point of the advertisement part using the remote controller 190.

Furthermore, the advertisement search unit 130 stores a specific number of I frames, for example, three I frames from the start point of an advertisement part in the advertisement DB, stores a specific number of I frames from the end point of the advertisement part in the advertisement DB, and also stores information about the time from the start point of the advertisement part to the end point of the advertisement part.

Thereafter, if an advertisement part is found to be present (Yes at step S320), the advertisement deletion unit 140 deletes the advertisement part, retrieved by the advertisement search unit 130, from the recorded media content at step S330.

The advertisement DB generation unit 150 generates an advertisement DB by separately storing the deleted advertisement part in the storage unit 120 at step S340.

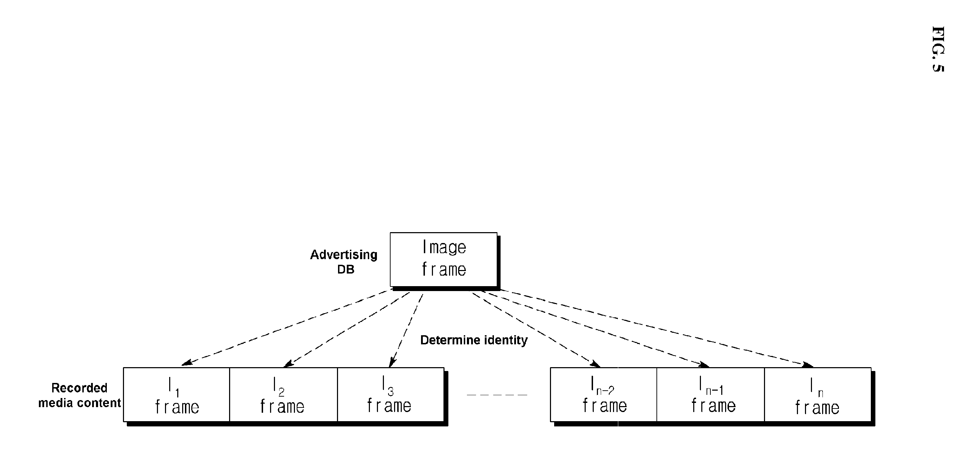

Thereafter, the media production unit 160 determines whether or not a frame that belongs to the recorded media content and that is the same as one image frame of the advertisement DB is present as illustrated in FIG. 5 at step S350. FIG. 5 is a diagram illustrating an example in which whether the same frame as an image frame of an advertisement DB is present in recorded media content is determined in accordance with an embodiment of the present invention.

In this case, the media production unit 160 compares the time of the advertisement part, including the same frame as one image frame of the advertisement DB, with the time of an advertisement part including the one image frame of the advertisement DB, and determines whether or not the advertisement part including the same frame as the one image frame of the advertisement DB is identical with the advertisement part including the one image frame of the advertisement DB based on a result of the comparison

In this case, the attributes of an advertisement are used to search the recorded media content for the advertisement. In general, an advertisement is configured within about 1 minute, and a black image is present between advertisements. When an advertisement appears, different 2 to 3 advertisements or different 10 or more advertisements consecutively appear. In this case, the same advertisement may be inserted into different pieces of content.

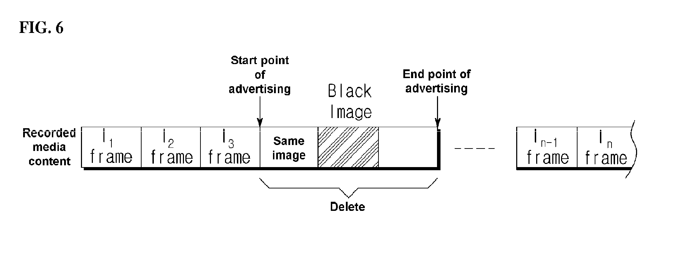

Thereafter, if, as a result of the comparison, the same frame is found to be present (Yes at step S360), the advertisement deletion unit 140 deletes the retrieved advertisement part from the recorded media content based on a black image at the front and rear of the same frame as the one image frame of the advertisement DB at step S370, as illustrated in FIG. 6. FIG. 6 is a diagram illustrating an example in which an advertisement part is deleted from recorded media content on a black image basis in accordance with an embodiment of the present invention.

In this case, if the time of the advertisement part deleted from the recorded media content based on the black image at the front and rear of the same frame as the one image frame of the advertisement DB is equal to or smaller than an advertisement time set by the remote controller 190, the advertisement deletion unit 140 stores the deleted advertisement part in a temporary advertisement DB.

Furthermore, if, as a result of the repetition of the aforementioned processes, a frame that belongs to another piece of media content of the recorded media content and that is the same as an image frame of the temporary advertisement DB is detected, the media production unit 160 stores one or more advertisement parts, deleted based on a black image at the front and rear of the detected frame, in the temporary advertisement DB and updates the temporary advertisement DB by applying the temporary advertisement DB to the advertisement DB.

Thereafter, the media production unit 160 generates media content from which the advertisement part has been deleted based on the black image at the front and rear of the same frame as the one image frame of the advertisement DB at step S380.

In this case, the media production unit 160 separately stores the media content from which the advertisement part has been deleted in another space of the storage unit 120.

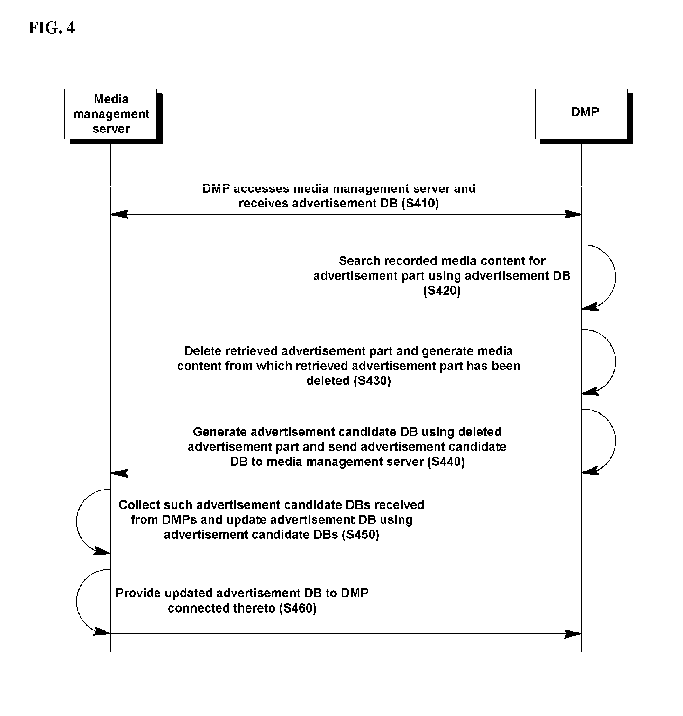

FIG. 4 is a flowchart illustrating a method for producing, by the system, media from which an advertisement has been removed in accordance with another embodiment of the present invention.

Referring to FIG. 4, in the system 200 for producing media from which an advertisement has been removed in accordance with another embodiment of the present invention, first, the DMP 230 accesses the media management server 210 and receives an advertisement DB at step S410.

Each of the plurality of DMPs searches recorded media content for an advertisement part using the advertisement DB at step S420.

The DMP deletes the retrieved advertisement part and generates media content from which the retrieved advertisement part has been deleted at step S430.

In this case, the DMP deletes the retrieved advertisement part from the recorded media content based on a black image at the front and rear of the same frame as one image frame of the advertisement DB.

Thereafter, the DMP generates an advertisement candidate DB using the deleted advertisement part and sends the advertisement candidate DB to the media management server 210 at step S440.

That is, if the time of the advertisement part deleted from the recorded media content based on the black image at the front and rear of the same frame as the one image frame of the advertisement DB is equal to or smaller than an advertisement time set by the remote controller 190, the DMP generates the advertisement candidate DB using the deleted advertisement part and sends the generated advertisement candidate DB to the media management server 210.

Thereafter, the media management server 210 collects such advertisement candidate DBs received from the plurality of DMPs and updates the advertisement DB using the advertisement candidate DBs at step S450.

Furthermore, the media management server 210 provides the updated advertisement DB to a DMP connected thereto at step S460.

Accordingly, the DMP receives the updated advertisement DB, deletes an advertisement part from recorded media content by applying the updated advertisement DB to the recorded media content, and produces only pure media content.

As described above, the present invention can achieve the apparatus and method for producing media from which an advertisement has been removed, wherein an advertisement is searched for in media content recorded in background, the retrieved advertisement is cut from the recorded media content, an advertisement DB is configured using the cut advertisement, the front and rear of a retrieved frame are cut based on a frame including a black screen if the retrieved frame that belongs to the recorded media content and that is the same as a frame of a photograph of the advertisement DB is present, and media content from which the advertisement has been removed is automatically produced.

In accordance with the present invention, media content can be produced by removing an advertisement part from recorded media content.

Accordingly, a user can conveniently watch media content without performing an operation of skipping an advertisement using an FF function or a jump play function as in a prior art.

Those skilled in the art to which the present invention pertains will understand that the present invention may be implemented in various detailed forms without changing the technical spirit or indispensable characteristics of the present invention. It will be understood that the aforementioned embodiments are illustrative and not limitative from all aspects. The scope of the present invention is defined by the appended claims rather than the detailed description, and the present invention should be construed as covering all modifications or variations derived from the meaning and scope of the appended claims and their equivalents.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of: A, B, or C" used in the description or the claims means "A or B or C or any combination of these elements."

While the specification describes particular examples of the present invention, those of ordinary skill can devise variations of the present invention without departing from the inventive concept. For example, the teachings herein refer to networks with femto cells and macro cells but are equally applicable to networks with other topologies.

Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP communication, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor may read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the spirit or scope of the invention. Thus, the present invention is not intended to be limited to the examples shown herein but is to be accorded the widest scope consistent with the principles and novel features disclosed herein.

## Claims

1. A STB (set top box) (100) in communication with an advertisement DB for removing at least one advertisement from media content and producing media content from which advertisement has been removed,
wherein the advertisement DB comprises a plurality of I frames (Intra coded frames) from frames of the advertisements, each advertisement being specified by black frames,
the STB comprising:
a communication unit (110) for receiving media content comprising at least one advertisement;
a storage unit (120) for storing the received media content comprising at least one advertisement;
a playback unit (170) for playing back the stored media content comprising at least one advertisement; and
a media production unit (160) for producing media content from which at least one advertisement has been removed;
wherein the media production unit (160) is configured:
to determine whether the media content comprising at least one advertisement comprises the same I frame as one of the plurality of I frames in the advertisement DB;
to determine a group of the frames between a black frame prior to the same I frame and a black frame after the same I frame as an advertisement region; and
to remove the advertisement region from the media content comprising at least one advertisement to produce media content from which at least one advertisement has been removed.

2. The STB (100) according to claim 1,
wherein the media production unit (160) is further configured:
to determine whether the media content comprising at least one advertisement comprises the same I frames as the remaining I frames of the plurality of I frames in the advertisement DB;
to confirm the determination of the advertisement region when it is determined that the media content comprising at least one advertisement comprises the same I frames as the remaining I frames of the plurality of I frames in the advertisement DB.

3. The STB (100) according to claim 2,
wherein the advertisement DB further comprises a playback time of an advertisement, and
wherein the media production unit (160) is further configured to confirm the determination of the advertisement region when the playback time of the advertisement region corresponds to the playback time of the advertisement in the advertisement DB.

4. The STB (100) according to claim 3,
wherein the plurality of I frames in the advertisement DB are a predetermined number of I frames from a beginning frame of the advertisement and the predetermined number of I frames to an end of the advertisement, the predetermined number being selectable by a user.

5. The STB (100) according to claim 1,
the STB further comprises an advertisement DB generation unit (150) for generating the advertisement DB and storing the advertisement DB in the storage unit,
wherein the advertisement DB generation unit (150) is configured:
from a user watching the media content comprising at least one advertisement, to receive a signal indicative of a beginning of a series of advertisements and a signal indicative of an end of the series of advertisements via a remote controller reception unit (190);
to divide the series of advertisements into a plurality of advertisement regions based on black frames between the beginning and the end of the series of advertisements; and
to store a plurality of I frames from frames of each of the plurality of advertisement regions in the advertisement DB.

6. The STB (100) according to claim 5,
the advertisement DB generation unit (150) is configured to store the plurality of I frames from the frames of each of the plurality of advertisement regions in the advertisement DB when the playback time of the advertisement region is shorter than a predetermined playback time.

7. The STB (100) according to claim 1,
the STB further comprises an advertisement candidate DB generation unit for generating an advertisement candidate DB, the advertisement candidate DB being used by an external media management server for generating and storing the advertisement DB,
wherein the advertisement candidate DB generation unit is configured:
from a user watching the media content comprising at least one advertisement, to receive a signal indicative of a beginning of a series of advertisements and a signal indicative of an end of the series of advertisements via a remote controller reception unit (190);
to divide the series of advertisements into a plurality of advertisement region candidates based on black frames between the beginning and the end of the series of advertisements; and
to transmit the plurality of advertisement region candidates to the external media management server (210),
wherein the external media management server (210) generates the advertisement DB based on the plurality of advertisement region candidates received from a plurality of the users.

8. The STB (100) according to claim 1,
the STB further comprises a temporary advertisement DB generation unit for generating the advertisement DB without a user's operation,
the temporary advertisement DB generation unit is configured:
(a) to detect the determination of the advertisement region for a first media content;
(b) in response to the detection of the determination of the advertisement region, to divide the first media content into a plurality of partitions based on black frames; and
(c) to store the partitions having a playback time shorter than a predetermined playback time as temporary advertisement regions in a temporary advertisement DB.

9. The STB (100) according to claim 8,
the temporary advertisement DB generation unit is further configured:
(d) to repeatedly perform (a) to (c) for media contents different from the first media content;
(e) as a result of the repetition, to determine which of the temporary advertisement regions are stored in the temporary advertisement DB more than a predetermined number of times; and
(f) to store a plurality of I frames from frames of the temporary advertisement regions which are stored in the temporary advertisement DB more than the predetermined number of times in the advertisement DB.

10. A computer readable medium for storing codes used in a STB (set top box) (100) in communication with an advertisement DB for removing at least one advertisement from media content and producing media content from which advertisement has been removed,
wherein the advertisement DB comprises a plurality of I frames (Intra coded frames) from frames of the advertisements, each advertisement being specified by black frames,
the codes comprising:
a code for receiving media content comprising at least one advertisement;
a code for storing the received media content comprising at least one advertisement;
a code for playing back the stored media content comprising at least one advertisement has been removed; and
a code for producing media content from which at least one advertisement has been removed;
wherein the code for producing media content from which at least one advertisement has been removed comprises:
a code for determining whether the media content comprising at least one advertisement comprises the same I frame as one of the plurality of I frames in the advertisement DB;
a code for determining a group of the frames between a black frame prior to the same I frame and a black frame after the same I frame as an advertisement region; and
a code for removing the advertisement region from the media content comprising at least one advertisement to produce media content from which at least one advertisement has been removed.

11. The computer readable medium for storing codes used in the STB (100) according to claim 10,
wherein the code for producing media content from which at least one advertisement has been removed further comprises:
a code for determining whether the media content comprising at least one advertisement comprises the same I frames as the remaining I frames of the plurality of I frames in the advertisement DB;
a code for confirming the determination of the advertisement region when it is determined that the media content comprising at least one advertisement comprises the same I frames as the remaining I frames of the plurality of I frames in the advertisement DB.

12. The computer readable medium for storing codes used in the STB (100) according to claim 11,
wherein the advertisement DB further comprises a playback time of an advertisement, and
wherein the code for producing media content from which at least one advertisement has been removed further comprises a code for confirming the determination of the advertisement region when the playback time of the advertisement region corresponds to the playback time of the advertisement in the advertisement DB.

13. The computer readable medium for storing codes used in the STB (100) according to claim 10,
to generate the advertisement DB and to store the advertisement DB in the STB, wherein the codes further comprises:
from a user watching the media content comprising at least one advertisement, a code for receiving a signal indicative of a beginning of a series of advertisements and a signal indicative of an end of the series of advertisements via a remote controller reception unit;
a code for dividing the series of advertisements into a plurality of advertisement regions based on black frames between the beginning and the end of the series of advertisements; and
a code for storing a plurality of I frames from frames of each of the plurality of advertisement regions in the advertisement DB.

14. The computer readable medium for storing codes used in the STB (100) according to claim 10,
to generate an advertisement candidate DB which is used by an external media management server for generating and storing the advertisement DB, wherein the codes further comprises:
from a user watching the media content comprising at least one advertisement, a code for receiving a signal indicative of a beginning of a series of advertisements and a signal indicative of an end of the series of advertisements via a remote controller reception unit;
a code for dividing the series of advertisements into a plurality of advertisement region candidates based on black frames between the beginning and the end of the series of advertisements; and
a code for transmitting the plurality of advertisement region candidates to the external media management server,
wherein the external media management server generates the advertisement DB based on the plurality of advertisement region candidates received from a plurality of the users

15. The computer readable medium for storing codes used in the STB (100) according to claim 10,
to generate the advertisement DB without a user's operation, wherein the codes comprises:
(a) a code for detecting the determination of the advertisement region for a first media content;
(b) in response to the detection of the determination of the advertisement region, a code for dividing the first media content into a plurality of partitions based on black frames; and
(c) a code for storing the partitions having a playback time shorter than a predetermined playback time as temporary advertisement regions in a temporary advertisement DB.
(d) a code for repeatedly performing (a) to (c) for media contents different from the first media content;
(e) as a result of the repetition, a code for determining which of the temporary advertisement regions are stored in the temporary advertisement DB more than a predetermined number of times; and
(f) a code for storing a plurality of I frames from frames of the temporary advertisement regions which are stored in the temporary advertisement DB more than the predetermined number of times in the advertisement DB.
